Europäisches Patentamt

European Patent Office

Office européen des brevets

(19)

(11) Publication number: 0 318 599
A1

(12) EUROPEAN PATENT APPLICATION

published in accordance with Art. 158(3) EPC

(21) Application number: 88905430.0

(22) Date of filing: 16.06.88

Data of the international application taken as a basis:

(86) International application number: PCT/JP 88/00588

(87) International publication number: WO 88/10466 (29.12.88 88/28)

(51) Int. Cl.⁴: G 06 F 3/023, G 06 F 9/06, G 06 F 13/00

(30) Priority: 16.06.87 JP 149945/87

(43) Date of publication of application: 07.06.89 Bulletin 89/23

(84) Designated Contracting States: DE FR GB

(71) Applicant: FANUC LTD, 3580, Shibokusa Aza-Komanba Oshino-mura, Minamitsuru-gun Yamanashi 401-05 (JP)

(72) Inventor: SEKI, Masaki, 3-15-2-406, Takaido-nishi, Suginami-ku Tokyo 168 (JP)
Inventor: TAKEGAHARA, Takashi, Shanbohru Hachioji 604 4-1-9, Myoujin-cho, Hachioji-shi Tokyo 192 (JP)
Inventor: SATO, Shuji Fanuc Dai-3 Virakaramatsu, 3527-1, Shibokusa Oshino-mura, Minamitsuru-gun Yamanashi 401-05 (JP)

(74) Representative: Billington, Lawrence Emlyn et al, HASELTINE LAKE & CO Hazlitt House 28 Southampton Buildings Chancery Lane, London WC2A 1AT (GB)

(54) METHOD AND APPARATUS FOR CONTROLLING KEYBOARD.

(57) When power is on and a system floppy (14, 15) is in a disc drive (11e), loading firmware (F1) reads the system program name from a predetermined memory region of the system floppy. Based on said system program name, the firmware checks whether the system program is for a keyboard (K1) having a load key (LK); if 'YES' the system program in the system floppy (14) is read into a RAM (11c) provided the load key is depressed, and if 'NO' the system program in the system floppy (15) is read into the RAM regardless of the load key. Thereafter, under the control of said system program a keyboard control firmware (K2) converts the date input from the keyboards (K1, K2) into a code based upon the data conversion software corresponding to said keyboard.

00318599

## DESCRIPTION

KEYBOARD CONTROL METHOD, AND APPARATUS THEREFOR

### Technical Field

This invention relates to a keyboard control method and an apparatus therefor. More particularly, the invention relates to a keyboard control method and apparatus in a system in which keyboards of a plurality of types are used interchangeably according to the particular application.

### Background Art

As shown in Fig. 4, key input data from a keyboard 1 is subjected to code conversion by a code converter 2 and then accepted by a system body 3. The latter is adapted to perform predetermined processing based on the accepted data.

Depending upon the system, keyboards of a plurality of types are used according to the particular application. In such a system, the types of keys located on each keyboard and the key input data differ. In consequence, the firmware (stored in a ROM) for converting the key input data into codes also differ from one keyboard to another.

Accordingly, in the prior art, the prescribed firmware (ROM) must be must be replaced by another depending upon the keyboard used. Alternatively, various types of firmware are incorporated in advance and a separate changeover switch is provided, with the firmware used being set by the changeover switch.

Depending upon the keyboard, a load key is or is not provided for the purpose of loading a system program and floppy. In the prior art, the arrangement is such that the system program is loaded in a RAM when the floppy has been loaded, irrespective of whether or not there is a load key.

However, in a system where the firmware (ROM) is exchanged or in one where the firmware is set by a changeover switch, a problem that is encountered in troublesome operation. In the system using the changeover switch, moreover, the need to provide the extra changeover switch is undesirable.

In the conventional system, the system program is loaded when the system floppy is loaded, regardless of whether there is a load key present. This is undesirable as far as a keyboard provided with a load key is concerned, since the presence of the load key in such case will be meaningless.

Accordingly, an object of the present invention is to provide a keyboard control method and apparatus in which replacement of firmware is unnecessary and a changeover switch need not be used.

Another object of the present invention is to provide a keyboard control method and apparatus in which, if a keyboard having a load key is connected, a system program is loaded only when the load key is pressed, whereas the system program will be loaded irrespective of load key operation in a case where the connected keyboard has no load key.

Disclosure of the Invention

On the condition that power has been introduced and a system floppy has been loaded in a disk drive, firmware for loading reads a system program identification from a predetermined storage area of the system floppy and checks, based on the system program identification, to see whether the system program is for a keyboard having a load key. If the answer is "YES", the system program is read out of the system floppy and stored in a RAM only when a load key is pressed. If the answer is "NO", the system program is read out of the system floppy and stored in the RAM even if a load key is not pressed. Thereafter, under control of the system program, firmware for keyboard control code-converts data inputted from the keyboard based on keyboard data conversion software conforming to the keyboard.

Brief Description of the Drawings

Fig. 1 is a block diagram of a keyboard control apparatus according to the present invention;

Fig. 2 is a view showing the correlation between system program identifications and keyboard conversion software;

Fig. 3 is a flowchart of processing of a keyboard control method according to the present invention; and

Fig. 4 is a view for describing the background of the invention.

## Best Mode for Carrying Out the Invention

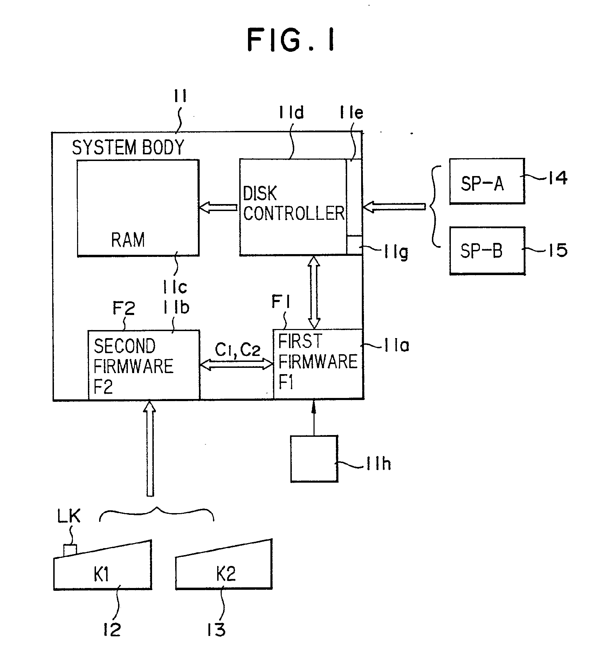

Fig. 1 is a block diagram of a keyboard control apparatus according to the present invention, in which numeral 11 denotes a system body, 12 a first keyboard having a load key LK, 13 a second keyboard not having a load key, 14 a system floppy disk storing a system program SP-A for the first keyboard Kl, and 15 a system floppy disk storing a system program SP-B for the second keyboard K2.

The system body 11 includes first firmware (F1) 11a for loading, second firmware (F2) 11b for keyboard control, a RAM 11c, a disk controller 11d, a disk drive 11e, a sensor 11g for sensing that a system floppy has been loaded in the disk drive, and a sensor 11h for sensing the introduction of power.

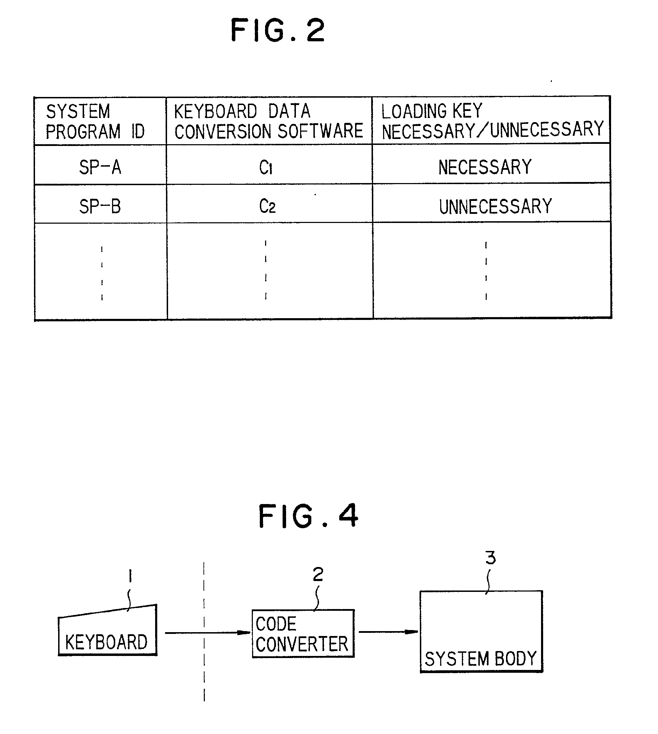

As shown in Fig. 2, the first firmware (F1) includes, in a form correlated with system program identifications (SP-A, SP-B, ...), (i) keyboard data conversion software (C1, C2, ...) and (ii) a table indicating whether pressing of a load key is required to load a system program. The load key LK causes the first firmware F1 to load a system program from a system floppy into the RAM 11c.

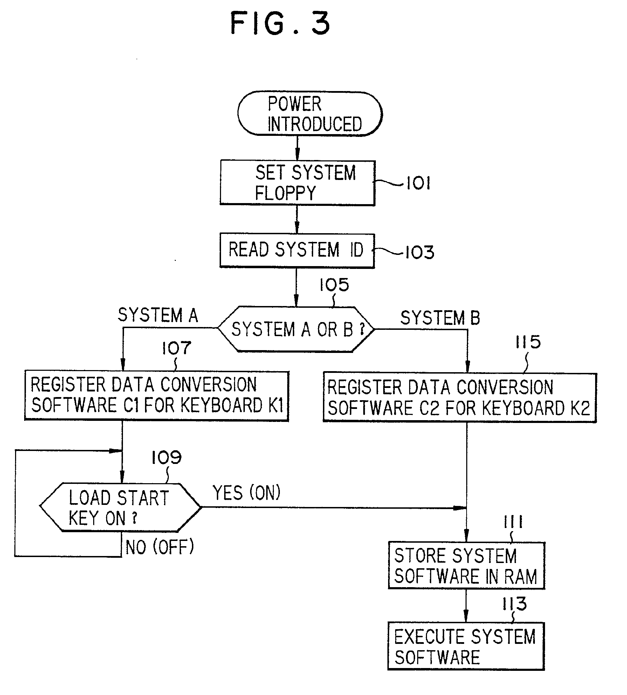

Fig. 3 is a flowchart of processing of a keyboard control method according to the present invention. The overall operation of Fig. 1 will now be described in accordance with this flowchart.

A predetermined keyboard (K1 or K2) is connected to the system body 11 and the system power supply is turned on, after which the system floppy (14 or 15) storing the system program (SP-A or SP-B) conforming to the connected keyboard is set in the disk drive 11e (step 101). It should be noted that the keyboard K1 corresponds to the system program SP-A, and that the keyboard K2 corresponds to the system program SP-B.

When the system floppy has been set, the first firmware F1 for loading causes the disk controller 11d to read the system program identification (ID name) stored at a predetermined storage area of the system floppy (step 103).

When the system program identification has been read, the first firmware F1 checks to see whether the system program identification is SP-A or SP-B (step 105).

If the system program identification is SP-A (i.e., if the system floppy 14 has been loaded), the first firmware F1 refers to the table of Fig. 2, delivers the data conversion software C1 for the first keyboard K1 to the keyboard control firmware F2, and determines that pressing of a load key is required in order to load the system program (step 107). It should be noted that in a case where the data conversion software C1, C2 for the first and second keyboards are contained in the second firmware F2, it will suffice to inform the second firmware of the system program identification.

Thereafter, if the load key LK on the first keyboard K1 is pressed (step 109), then the first firmware F1 for loading will read the system program SP-A stored in the system floppy 14 and store this system program in the RAM 11c (step 111).

Thereafter, under the control of the system program SP-A stored in the RAM 11c, the firmware F2 for keyboard control code converts and accepts the data, which is inputted from the first keybord K1, based on the abovementioned keyboard data conversion software C1 (step 113).

If the system program identification is SP-B at step 105 (i.e., if the system floppy 15 has been loaded), the first firmware F1 refers to the table of Fig. 2, delivers the data conversion software C2 for the second keyboard K2 to the keyboard control firmware F2, and determines that pressing of a load key is not required in order to load the system program (step 115). This is followed by the processing from step 111 onward. That is, even if the load key is not pressed, the first firmware F1 for loading reads the system program SP-B stored in the system floppy 15 and stores this system program in the RAM 11c (step 111). Thereafter, under the control of the system program SP-B stored in the RAM 11c, the firmware F2 for keyboard control code converts and accepts the data, which is inputted from the second keybord K2, based on the abovementioned keyboard data conversion software C2 (step 113).

Thus, in accordance with the present invention, replacement of firmware is not required and a changeover switch need not be provided. As a result, troublesome operation is not involved. Moreover, in a case where a keyboard having a load key is connected, a system program is loaded only when the load key is pressed. If a keyboard not having a load key is connected, a system program can be loaded regardless of load key operation.

CLAIMS:

1. A keyboard control method of a system in which a system program is loaded and predetermined processing is executed, based on data inputted from a keyboard, in accordance with said system program, characterized by:

reading a system program identification from a predetermined storage area of a system floppy on the condition that power is being introduced from a power supply and the system floppy has been loaded in a disk drive;

determining, by referring to said system program identification, whether the system program is for a keyboard having a load key or for a keyboard not having a load key;

if the system is for a keyboard having a load key, reading said system program from the floppy and storing it in a RAM only when the load key is pressed;

if the system is for a keyboard not having a load key, reading the system program from the floppy and storing it in a RAM even if a load key is not pressed;

converting data inputted from the keyboard into a code based on data conversion software conforming to said keyboard; and

causing the system to execute predetermined processing based on data converted into the code.

2. A keyboard control method according to claim 1, characterized in that a correlation between system program identifications and data conversion software used in said code conversion is preset, and data conversion software conforming to a keyboard actually connected is discriminated based on said correlation.

3. A keyboard control apparatus of a system in which a system program is loaded and predetermined processing is executed, based on data inputted from a keyboard, in accordance with said system program, characterized by comprising:

detecting means for detecting that power is being introduced from a power supply and that a system floppy has been loaded in a disk drive;

a loading firmware section for reading a system program identification from a predetermined storage area of said system floppy on the condition that power is being introduced from the power supply and that the system floppy has been loaded; determining, by referring to said system program identification, whether the system program is for a keyboard having a load key or for a keyboard not having a load key; if the system is for a keyboard having a load key, reading said system program from the floppy and storing it in a RAM only when the load key is pressed; if the system is for a keyboard not having a load key, reading the system program from the floppy and storing it in a RAM even if a load key is not pressed; and

a keyboard control firmware section for converting data inputted from the keyboard into a code based on data conversion software conforming to said keyboard.

00318599

4.  A keyboard control apparatus according to claim 3, characterized in that a correlation between system program identifications and data conversion software used in said code conversion is preset in the loading firmware section, and data conversion software conforming to a keyboard actually connected is discriminated based on said correlation and transferred to the keyboard control firmware section.

# FIG. 1

# FIG. 2

| SYSTEM PROGRAM ID | KEYBOARD DATA CONVERSION SOFTWARE | LOADING KEY NECESSARY/UNNECESSARY |
|---|---|---|
| SP-A | $C_1$ | NECESSARY |
| SP-B | $C_2$ | UNNECESSARY |
| ⋮ | ⋮ | ⋮ |

# FIG. 4

KEYBOARD → CODE CONVERTER → SYSTEM BODY

# FIG. 3

POWER
INTRODUCED

SET SYSTEM
FLOPPY — 101

READ SYSTEM ID — 103

SYSTEM A OR B ? — 105

SYSTEM A

SYSTEM B

REGISTER DATA CONVERSION
SOFTWARE C1 FOR KEYBOARD K1 — 107

REGISTER DATA CONVERSION
SOFTWARE C2 FOR KEYBOARD K2 — 115

LOAD START
KEY ON ? — 109

YES (ON)

NO (OFF)

STORE SYSTEM
SOFTWARE IN RAM — 111

EXECUTE SYSTEM
SOFTWARE — 113

# INTERNATIONAL SEARCH REPORT

00318599

International Application No PCT/JP88/00588

## I. CLASSIFICATION OF SUBJECT MATTER (if several classification symbols apply, indicate all) 6

According to International Patent Classification (IPC) or to both National Classification and IPC

Int.Cl⁴  G06F3/023, G06F9/06, G06F13/00

## II. FIELDS SEARCHED

Minimum Documentation Searched 7

| Classification System | Classification Symbols |
|---|---|
| IPC | G06F3/02, G06F3/023, G06F9/06, G06F13/00 |

Documentation Searched other than Minimum Documentation
to the Extent that such Documents are Included in the Fields Searched 8

| | |
|---|---|
| Jitsuyo Shinan Koho | 1971 - 1987 |
| Kokai Jitsuyo Shinan Koho | 1971 - 1987 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 62-5262 6 (Toshiba Corp.) 7 March 1987 (07. 03. 87) (Family: none) | 1-4 |
| X | JP, A, 62-126423 (Toshiba Corp.) 8 June 1987 (08. 06. 87) (Family: none) | 1-4 |
| P | JP, A, 62-135921 (Ricoh Co., Ltd.) 18 June 1987 (18. 06. 87) (Family: none) | 1-4 |
| X | JP, A, 60-262256 (Omron Tateisi Electronics Co.) 25 December 1985 (25. 12. 85) (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 24, 1988 (24. 08. 88) | September 12, 1988 (12. 09. 88) |

| International Searching Authority | Signature of Authorized Officer |
|---|---|
| Japanese Patent Office | |

Form PCT ISA 210 (second sheet) (January 1985)